## Europäisches Patentamt

## European Patent Office

## Office européen des brevets

(11) Publication number: **0 030 928**
**A1**

# (12) EUROPEAN PATENT APPLICATION

(21) Application number: **80850188.6**

(22) Date of filing: **11.12.80**

(51) Int. Cl.³: **B 60 K 1/04**
**B 60 S 5/00, B 66 F 9/19**

(30) Priority: **12.12.79 SE 7910219**

(43) Date of publication of application:
**24.06.81 Bulletin 81/25**

(84) Designated Contracting States:
**BE DE FR GB IT LU NL**

(71) Applicant: **Aktiebolaget Bygg- och Transportekonomi (BT)**
**Box 331**
**S-595 00 Mjölby(SE)**

(72) Inventor: **Jarl, Bernt**
**Vändgatan 20**
**S-591 60 Motala(SE)**

(74) Representative: **Erixon, Bo**
**Box 15200**
**S-104 65 Stockholm(SE)**

(54) Arrangements for handling bulky or heavy articles.

(57) An arrangement for handling batteries or other bulky or heavy equipment, especially for vehicles such as battery-operated industrial trucks (1), in which a supporting base (8) on which the batteries (7) rest, is provided with several openings (11), making it possible for an elevating trolley (12) having a platform (13) equipped with rollers (16) to be so brought under the base (8), that the rollers (16) are located at the openings (11), after which the trolley platform can be raised so that the rollers (16) lift the battery (7), which then can be pulled out of the vehicle (1) to a carrier region of the platform (13) to be transported away after lowering of the rollers (16). The trolley (12) may be a hydraulically operated hand pallet truck or similar vehicle.

./...

Fig 2

1.

ARRANGEMENTS FOR HANDLING BULKY OR HEAVY ARTICLES

The present invention relates to an arrangement for the handling of bulky or heavy articles, such as batteries and other equipment, especially for vehicles such as battery-operated industrial trucks.

A problem in the exchange of batteries, servicing etc. of the above mentioned type of vehicles is the difficulty in simply and safely transporting of the batteries into and out of the vehicle. The batteries are both bulky and heavy, so therefore relatively complicated lifting devices are necessary, both for the handling of the batteries and for the prevention of accidents. The batteries weigh in many cases between a half and one tonne.

The present invention provides an arrangement for the handling of bulky or heavy articles, wherein a supporting base for the article is provided with at least one opening accessible from below, and handling means is adapted to be introduced below said base and is provided with rollers that are locatable in said at least one opening, whereby the support of the article can be transferred from said base to the rollers so located, for movement of the article on said rollers to a carrier region of the handling means whereon it can rest for transport.

2.

Thus, in a battery-operated industrial truck it can be arranged that the batteries rest on a bottom plate equipped with openings; this makes it possible for an elevating vehicle provided with rollers to be brought in under the bottom plate, with the rollers in a lowered position, so that the rollers are registered with the openings in the plate, and they are then raised sufficiently to lift the battery from the bottom plate. The battery can then be pulled out of the truck, and, if the rollers of the elevating vehicle extend over an area considerably longer than the battery, this can rest on those of the rollers that are outside of the truck. The rollers of the elevating vehicle can then be returned to their lowered position and in that way brought clear of the truck bottom plate and then the elevating vehicle can be taken away, carrying the removed battery.

The invention can of course be employed for the handling of bulky or heavy articles other than batteries, and can be used in other applications than vehicles.

In the accompanying schematic drawings there is illustrated one embodiment of a device according to the invention, by way of example. In the drawings:

Fig. 1 is a side view of an industrial truck, showing in particular the battery location, and

Fig. 2 is a partial sectional view taken along the

3.

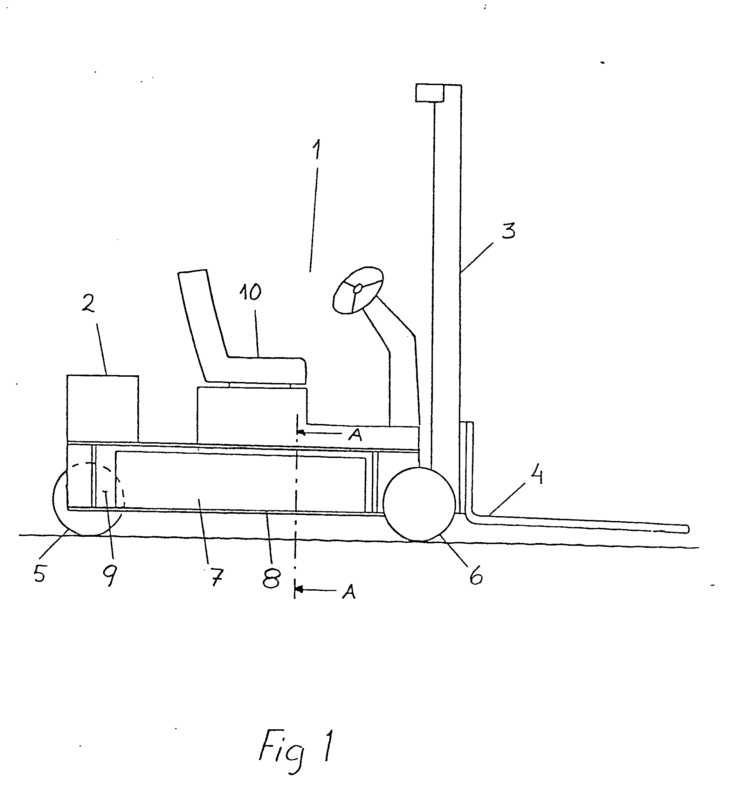

section line A-A of Fig. 1, and illustrates the truck with handling means effecting a battery exchange operation.

The drawings show an industrial truck 1 with a chassis 2, a lift mast 3 and a lifting fork 4 on the lift mast. The truck is furthermore provided with rear wheels 5 and front wheels 6. The batteries 7 for the operation of the truck 1 are supported on a bottom plate 8 in a space 9 in the chassis 2 disposed below the driver's seat 10.

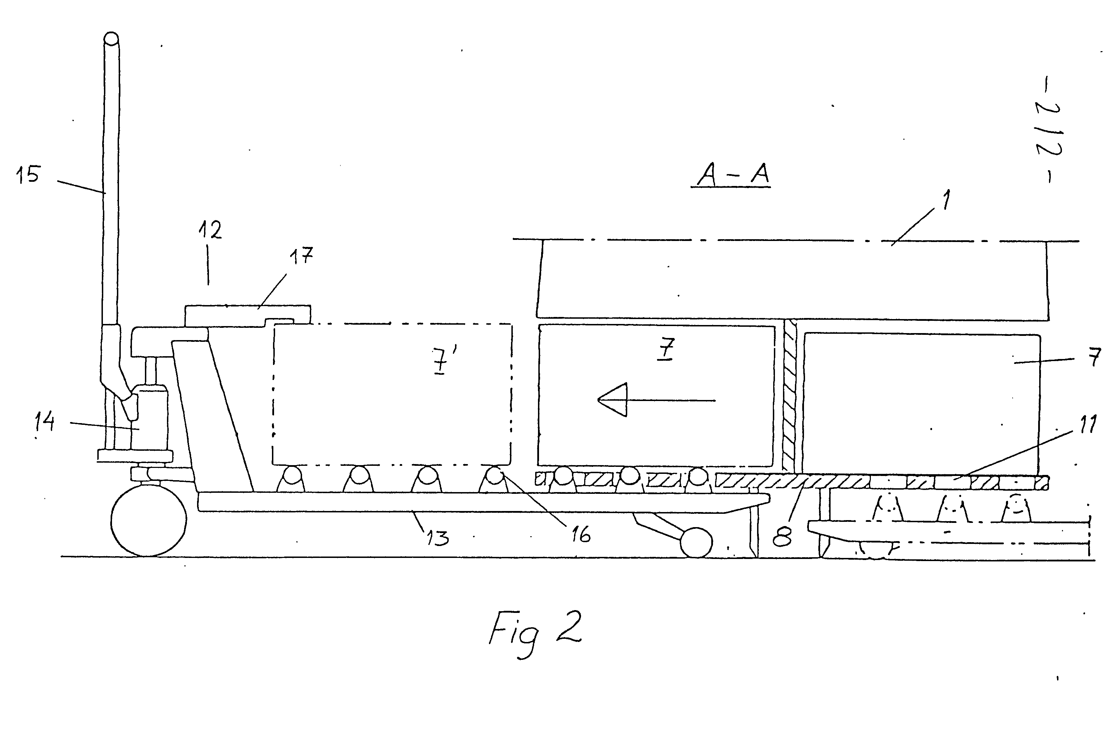

The bottom plate 8 is provided with a series of equispaced apertures 11 (Fig. 2), the purpose of which will become evident in the following.

For a battery exchange operation there is employed handling means in the form of a trolley 12 of the kind having a load-carrying device 13, which is upwardly and downwardly movable. Specifically, Fig. 2 shows a hydraulic hand pallet truck with a hydraulic drive 14 arranged on the trolley 12 to lift the load carrying device 13, the trolley 12 being operated via a control handle 15. The load carrying device 13 of the trolley 12 takes the form of a platform or frame on which rollers 16 are disposed in parallel at equal distances that correspond to the spacing between the apertures 11 in the bottom plate 8.

4.

In order to remove a run-down battery 7 from the truck 1, the trolley 12 is brought to the position shown in broken lines in the right of Fig. 2. The load carrying device 13 is then lifted to an elevated position so that the rollers 16 pass through the apertures 11 and thus lift the battery 7 from the bottom plate 8. The battery 7 can now be pulled out from the truck 1 on the rollers 16 to an external position 7' on a carrier region of the trolley. The lifting device 13 is then lowered and the trolley 12 is withdrawn from the position under the truck to a position clear of the truck. A bracket 17 is disposed on the trolley 12 to lock a battery on the carrier region during transport to and from the truck 1.

The insertion of a new battery 7 into the space 9 in the truck is carried out in a reverse manner to that described for the removal operation described above.

CLAIMS

1. An arrangement for the handling of bulky or heavy articles (7), c h a r a c t e r i z e d  i n  that a supporting base (8) for the article is provided with at least one opening (11) accessible from below, and handling means (12) is adapted to be introduced below said base (8) and is provided with rollers (16) that are locatable in said at least one opening (11), whereby the support of the article (7) can be transferred from said base (8) to the rollers (16) so located, for movement of the article (7) on said rollers (16) to a carrier region of the handling means (12) whereon it can rest for transport.

2. An arrangement according to claim 1, c h a r a c t e r i z e d  i n that further rollers (16) are provided in said carrier region of the handling means (12) for supporting the article (7) thereon.

3. An arrangement according to claim 1 or claim 2, c h a r a c t e - r i z e d  i n  that the handling means comprises a trolley (12) provided with means (14) for raising said rollers (16).

4. An arrangement according to claim 3, c h a r a c t e r i z e d  i n that said trolley is a pallet truck (12) or like vehicle provided with hand-operated hydraulic raising means (14) for said rollers (16).

Fig 1

Fig 2

A - A

-212-

0030928

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | DE – A1 – 2 657 225 (LUCAS INDUSTRIES LTD.) -- | | B 60 K 1/04<br>B 60 S 5/00<br>B 66 F 9/19 |
| A | DE – A – 2 359 054 (STE SOVEL VEHICULES ELECTRIQUES INDUSTRIELS) -- | | |
| A | DE – A – 2 156 867 (JAPANESE NATIONAL RAILWAYS) -- | | |
| A | US– A – 2 432 182 (TURNER) ---- | | |

TECHNICAL FIELDS SEARCHED (Int. Cl.³)

B 60 K 1/00
B 60 S 5/00
B 66 F 9/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 20-02-1981 | BECKER |

EPO Form 1503.1 06.78